# EUROPÄISCHE PATENTSCHRIFT

(11) **EP 1 382 200 B1**
(45) Veröffentlichungstag und Bekanntmachung des Hinweises auf die Patenterteilung: **19.03.2008**
(21) Anmeldenummer: 02732363.3
(22) Anmeldetag: 30.03.2002
(51) Int. Cl.: H04N 7/16, H04N 1/00

(54) **Verfahren zum Abspielen von Audiodaten mit einem Unterhaltungsgerät**
Method for playing back audio data by means of an entertainment device
Procédé de lecture de données audio au moyen d'un appareil de divertissement

(30) Priorität: 18.04.2001 DE 10119067
(43) Veröffentlichungstag der Anmeldung: 21.01.2004
(73) Patentinhaber: ROBERT BOSCH GMBH, 70442 Stuttgart (DE)
(72) Erfinder: KOCH, Hartwig, 31139 Hildesheim (DE); NABERFELD, Frank, 44359 Dortmund (DE); HOFMANN, Frank, 31139 Hildesheim (DE); MLASKO, Torsten, 30982 Pattensen (DE)
(86) Internationale Anmeldenummer: PCT/DE2002/001166
(87) Internationale Veröffentlichungsnummer: WO 2002/085021

(56) Entgegenhaltungen:
- EP-A- 0 593 024
- EP-A- 0 926 020
- WO-A-00/59223
- WO-A-99/39466
- US-A- 5 867 205

## Beschreibung

### Stand der Technik

Die Erfindung geht aus von einem Verfahren zum Abspielen von Audiodaten mit einem Unterhaltungsgerät nach der Gattung des unabhängigen Patentanspruchs.

Es ist bereits aus der nicht vorveröffentlichten deutschen Patentanmeldung DE 101 16 722 bekannt, dass Multimediadaten ein Merkmal aufweisen wie beispielsweise ein Programmtyp (PTY) oder eine Beschreibungsdatei wie bei MPEG7 und danach ein Benutzerprofil erstellt werden kann.

Aus der WO 99/39466 ist ein personalisierbares Radiogerät bekannt, bei dem auf Abruf durch den Benutzer verschiedene Programminhalte wiedergegeben werden können. Die Inhalte, die durch die Vorgaben des Benutzers ausgewählt wurden, werden in das Endgerät übertragen, gegebenenfalls gespeichert und wiedergegeben.

Die US 5,867,205 zeigt ein Empfangsgerät, bei dem Daten in Abhängigkeit eines vom Benutzer festgelegten Benutzerprofils für Audio- oder Videosignalkanäle und Audio- oder Videosignale im Wiedergabegerät abgespeichert werden. Aus den empfangenen Signalen wird eine Klasseninformation extrahiert. Das Profil wird zur Steuerung der Wiedergabe benutzt. Die Listeneinträge im Benutzerprofil können mit Prioritäten versehen werden, womit bei gleichzeitigem Empfang von mehreren Kanälen Signale vom Kanal mit höherer Priorität ausgewählt werden.

Aus der WO 00/59223 ist ein Datenspeicherungssystem bekannt, innerhalb dessen einem benutzerseitigem Speichermedium Daten kontrolliert zugeführt werden, indem diese anhand einer Benutzerinteressenliste mit unterschiedlichen Prioritäten gefiltert werden.

### Vorteile der Erfindung

Das erfindungsgemäße Verfahren zum Einstellen eines Unterhaltungsgeräts mit den Merkmalen des unabhängigen Patentanspruchs hat demgegenüber den Vorteil, dass ein personalisiertes Abspielen von Audiodaten möglich wird. Damit kann quasi ein personalisiertes Radio festgelegt und durch das Benutzerprofil und die Prioritätenvergabe realisiert werden. Dabei kann das Unterhaltungsgerät sowohl von empfangenen Audiodaten als auch von abgespeicherten Audiodaten ein Programm zum Abspielen zusammenstellen.

Dies erhöht den Komfort für einen Benutzer, personalisiert die Ausgabe und führt auch zu einer zeitunabhängigen Präsentation von Multimediadaten. Insbesondere DAB (Digital Audio Broadcasting) als Rundfunkübertragungsverfahren eignet sich zum Übertragen von Multimediadaten. Diese können entweder als Objekte oder sogenannte Streams übertragen werden. Hier ist es auch besonders einfach, den Audiodaten Inhaltsbeschreibungen und Marken zuzuweisen. Durch das Benutzerprofil als Filter werden dann die entsprechenden Audiodaten ausgefiltert. Werden unterschiedliche Audiodaten mit der gleichen Priorität gefunden oder sind verfügbar, werden die zuerst gefundenen Multimediadaten zum Abspielen genommen.

Durch die in den abhängigen Ansprüchen aufgeführten Maßnahmen und Weiterbildungen sind vorteilhafte Verbesserungen des im unabhängigen Patentanspruch angegebenen Verfahrens zum Abspielen von Audiodaten mit einem Unterhaltungsgerät möglich.

Besonders vorteilhaft ist, dass die Audiodaten mittels digitaler Funksignale empfangen werden. Damit kann dann aus aktuell verfügbaren Audiodaten ein personalisiertes Rundfunkprogramm zusammengestellt werden. Die Audiodaten können dabei mittels Mobilfunk oder Rundfunk empfangen werden.

Darüber hinaus ist es von Vorteil, dass die Audiodaten anhand des Benutzerprofils abgespeichert werden, um später wiedergegeben werden zu können. Damit ist eine zeitunabhängige Wiedergabe der Audiodaten möglich.

Weiterhin ist es von Vorteil, dass das erfindungsgemäße Unterhaltungsgerät nach Informationen einer elektronischen Programmzeitschrift eingeschaltet wird und dann anhand des Benutzerprofils Audiodaten abgespeichert und/oder abgespielt werden. Dies ermöglicht eine zeitgesteuerte Aufnahme, die auch merkmalsabhängig ist, von für einen Benutzer interessierenden Audiodaten.

Weiterhin ist es von Vorteil, dass bei einer Stummschaltung Audiodaten, die eine hohe Priorität aufweisen, abgespielt werden und zwar trotz der Stummschaltung. Dies ermöglicht, dass für einen Benutzer besonders wichtige Daten ihm sofort zur Verfügung gestellt werden. Darüber hinaus ist es von Vorteil, dass die Audiodaten anhand der Klassifizierung miteinander verknüpft werden und so verwandte Audiodaten hintereinander abgespielt werden können.

Es ist weiterhin von Vorteil, dass die Audiodaten entsprechend ihrer Klassifizierung im Unterhaltungsgerät hierarchisch in einer Verzeichnisstruktur abgespeichert werden. Von übergeordneten Verzeichnissen mit allgemeiner Klassifizierung kann durch das Hinzufügen weiterer Unterverzeichnisse eine detailliertere Differenzierung erzielt werden. Dies ermöglicht die besonders einfache Auswertung.

Schließlich ist es auch von Vorteil, dass ein Unterhaltungsgerät zur Durchführung des erfindungsgemäßen Verfahrens vorliegt, das einen Prozessor zur Auswertung und Decodierung der Audiodaten anhand des Benutzerprofils, einen Speicher zum Abspeichern der Audiodaten und des Benutzerprofils, einen Lautsprecher, eine Anzeige, eine Empfangsvorrichtung und eine Eingabevorrichtung aufweist.

### Zeichnungen

Ausführungsbeispiele der Erfindung sind in der Zeichnung dargestellt und werden in der nachfolgenden Beschreibung näher erläutert. Es zeigt Figur 1 ein Blockschaltbild des erfindungsgemäßen Unterhaltungsgeräts, Figur 2 ein erstes Flußdiagramm des erfindungsgemäßen Verfahrens, Figur 3 ein zweites Flußdiagramm des erfindungsgemäßen Verfahrens, Figur 4 ein drittes Flußdiagramm des erfindungsgemäßen Verfahrens und Figur 5 ein viertes Flußdiagramm des erfindungsgemäßen Verfahrens.

### Beschreibung

Viele elektronische Geräte werden zunehmend durch persönliche Einstellungen individualisiert. Insbesondere bei Unterhaltungsgeräten, wo eine Vielzahl von Programmangeboten vorliegt, ist eine solche Individualisierung für einen Benutzer äußerst hilfreich. Erfindungsgemäß wird daher ein Verfahren zum Abspielen von Audiodaten daten mit einem Verfahren zum Abspielen von Audiodaten mit einem Unterhaltungsgerät vorgeschlagen, bei dem eine Priorisierung der Audiodaten aufgrund der Klassifizierung dieser Audiodaten, also beispielsweise einer begleitenden Beschreibung, durchgeführt wird und dass dann die Audiodaten anhand der Prioritäten und der Verfügbarkeit abgespielt werden. Dabei können empfangene Audiodateien als auch auf einem Datenträger abgespeicherte Audiodaten jeweils ausgewählt werden. Durch eine Prioritätenvergabe ist es damit möglich, zwischen Genres, den Quellen und anderen Parametern zu unterscheiden.

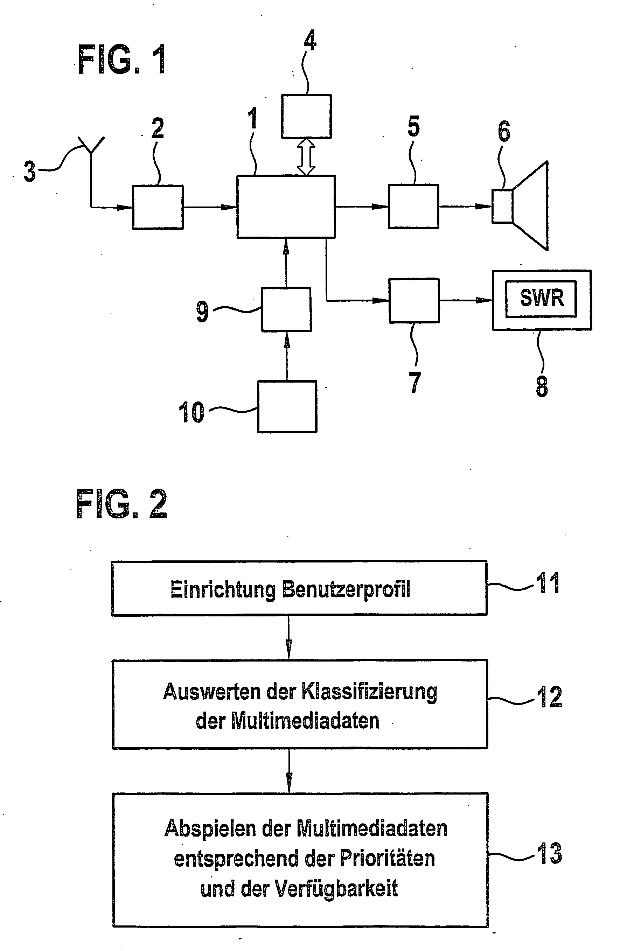

Figur 1 zeigt als Blockschaltbild ein erfindungsgemäßes Unterhaltungsgerät. Unter Unterhaltungsgerät wird ein Autoradio, ein tragbares Gerät zum Abspielen von Tonträgern, gegebenenfalls mit einem Rundfunkempfänger oder eine Heimempfangsanlage, also eine Stereoanlage mit einem Tuner, verstanden.

Eine Antenne 3 ist an einen Eingang einer Rundfunkempfangsvorrichtung 2 angeschlossen. Die Rundfunkempfangsvorrichtung 2 ist über einen Datenausgang mit einem Prozessor 1 verbunden. Der Prozessor 1 ist über einen Datenein-/-ausgang mit einem Speicher 4 verbunden. In dem Speicher 4 ist ein Speichermedium vorhanden, beispielsweise eine Festplatte, eine CD oder eine Multimediacard (MMC). Über einen ersten Datenausgang ist der Prozessor 1 mit einer Signalverarbeitung 5 verbunden, die einen Lautsprecher 6 ansteuert. Über einen zweiten Datenausgang ist der Prozessor 1 mit einer Signalverarbeitung 7 verbunden, die eine Anzeige 8 ansteuert. Über einen zweiten Dateneingang ist der Prozessor 1 mit einer Signalverarbeitung 9 verbunden, die Signale von einer Eingabevorrichtung 10 aufbereitet.

Mittels der Eingabevorrichtung 10 gibt ein Benutzer seine persönlichen Prioritäten für verschiedene Klassifizierungen der Audiodaten in einem Benutzerprofil ein, wobei die Klassifizierungen feststehen und senderseitig oder herstellerseitig den Audiodaten hinzugefügt werden. Dabei kann er beispielsweise wählen, dass Verkehrsnachrichten mit höchster Priorität gekennzeichnet werden dann normale Nachrichten, dann Klassik und schließlich Reportagen. In Abhängigkeit davon sucht der Prozessor 1 in den vorhandenen Datenquellen (Empfang und Speicher) nach verfügbaren Audiodaten, die diesen Kriterien entsprechen. Empfängt das Unterhaltungsgerät über die Antenne 3 und das Rundfunkempfangsgerät 2 aktuelle Verkehrsnachrichten, werden diese Verkehrsnachrichten durchgeschaltet und mit dem Lautsprecher 6 wiedergegeben. Sind keine Verkehrsnachrichten verfügbar und auch keine anderen Nachrichten, dann wird nach Klassik gesucht. Klassik kann sowohl über die Antenne 3 und das Rundfunkempfangsgerät 2 als auch vom Speicher 4 als Audiodaten entnommen werden.

Als Rundfunkübertragungsverfahren wird hier DAB (Digital Audio Broadcasting) verwendet. DAB ist ein Mehrträgerverfahren, das insbesondere die breitbandige digitale und unidirektionale Übertragung von nahezu beliebigen Multimediadaten ermöglicht. Andere hier gleichfalls anwendbare Rundfunkübertragungsverfahren sind DVB (Digital Video Broadcasting) und DRM (Digital Radio Mondiale). Mit solchen digitalen Rundfunkübertragungsverfahren wird zuweilen auch eine elektronischen Programmzeitschrift (Electronic Programme Guide = EPG) übertragen, anhand derer das erfindungsgemäße Unterhaltungsgerät zeitgesteuert ein- und ausgeschaltet werden kann. Anhand des Benutzerprofils werden dann die Audiodaten in einem solchen Zeitfenster entweder im Speicher 4 abgespeichert oder direkt mittels des Lautsprechers 6 dargestellt. Ist der Speicher 4 voll, dann ist es möglich, dass abzuspeichernde Audiodaten solche bereits abgespeicherten Audiodaten überschreiben, die eine niedrigere Priorität aufweisen.

Viele Unterhaltungsgeräte weisen eine Stummschaltung durch eine sogenannte Mute-Taste auf. Erfindungsgemäß ist nun vorgesehen, dass im Benutzerprofil solche Prioritäten vergeben werden können, die eine Stummschaltung ignorieren und daher trotzdem abgespielt werden. Dies kann beispielsweise für Verkehrsnachrichten verwendet werden, um trotz einer Stummschaltung abgespielt zu werden, so dass der Benutzer notwendige Informationen dennoch erhält.

In Figur 2 ist ein erstes Flußdiagramm des erfindungsgemäßen Verfahrens dargestellt. In Verfahrensschritt 11 richtet der Benutzer mittels der Eingabevorrichtung 10 und der Anzeige 8, in dem seine Angaben hier wiedergegeben und Hilfestellungen gegeben werden, sein Benutzerprofil ein. Dabei gibt er für verschiedene Klassifizierungsmerkmale der Audiodaten wie oben dargestellt Prioritäten. In Verfahrensschritt 12 führt dann der Prozessor 1 anhand dieses Benutzerprofils eine Auswertung der Klassifizierung der verfügbaren Audiodaten durch. Die Verfügbarkeit richtet sich nach den abgespeicherten Audiodaten im Speicher 4, also beispielsweise einem Datenträgerlaufwerk, wie DVD, CD oder Mini-Disc oder auch über die empfangenen Audiodaten, die mittels digitaler Rundfunksignale empfangen wurden. Anstatt digitaler Rundfunksignale können natürlich auch digitale Funksignale wie Mobilfunksignale hierfür verwendet werden. Die in Verfahrensschritt 12 ausgewählten Audiodaten werden in Verfahrensschritt 13 abgespielt und zwar entsprechend der Prioritäten und der Verfügbarkeit.

Für die Ausstrahlung der Audiodaten in Objektform kommt bei DAB das Protokoll MOT (Multimedia Object Transfer) in Frage. Die Inhaltsklassifizierung kann dabei durch den Objektnamen, einen Directory Pfad, durch Metadaten (MOT Header Extensions) oder zusätzlich beschreibende Objekte oder durch eine Kombination dieser Parameter erfolgen. Unter Objekten wird hier also eine abgeschlossene Einheit wie eine Datei verstanden. Bei Audiodaten im Streamformat, z.B. einem Radioprogramm kann die Klassifizierung durch statische und besonders dynamische DAB-Programmtypen (PTY) während der Ausstrahlung erfolgen.

Desweiteren kann ein EPG wie oben dargestellt für die zeitgesteuerte Aufnahme von Teilen der Audiodaten eingesetzt werden. Dabei ist ein Triggersignal von Vorteil, um die Aufnahme zu starten und zu stoppen, beispielsweise mit Hilfe der PTYs. Durch das Abspeichern der Audiostreamdaten werden Audioobjektdaten erzeugt. Die Audiodaten können als einzelne Dateien oder als Ströme vorliegen. Bei einem knappen Speichervolumen im Speicher 4 kann die Löschung von Audiodaten auch entsprechend von im Profil vorgegebenen Prioritäten erfolgen.

Das Abspielen der Audiodaten kann im Rahmen des Benutzerprofils auch dynamisch erfolgen. Gibt beispielsweise der Benutzer nun die Kategorie Börse ein, werden alle vorhandenen Objekte der Aktualität nach präsentiert, die in die Kategorie Börse fallen. Der Wechsel der Kategorien kann vom Benutzer gesteuert, automatisch oder zufällig erfolgen. Insbesondere durch die Zufälligkeit wird ein künstliches Radioprogramm suggeriert. Weiterhin ist es möglich, dass dem Benutzer ein Hinweis auf andere vorhandene Objekte im laufenden Programm während der Audiodatenwiedergabe angezeigt oder deutlich gemacht wird. Beispielsweise ein Link zu einem Objekt. Dadurch wird der Sprung zu vertiefenden erweiterten Audiodaten möglich, die vertiefenden erweiterten Audiodaten möglich, die beispielsweise Zusatzinformationen, ähnliche oder verwandte Nachrichten oder E-Commerce-Möglichkeiten bieten. Diese Zusatzinformationen können auch in den Audiodaten selbst gespeichert sein und so zusätzlich deutlich gemacht werden. Die Audiodaten sind wie dargestellt als Audio z.B. MPEG1 oder MPEG2, Layer 1 bis 3, AAC, Realaudio, Text to Speech oder als Video (MPEG2, MPEG4, Standbilder mit JPEG, Gifbilder, HTML-Seiten, die für eine bestimmte Zeit angezeigt werden) darstellbar.

Der Speicher 4 im Unterhaltungsgerät wird von einem DAB-Datenstrom aufgebaut. Wie oben dargestellt sind auch andere Quellen denkbar, beispielsweise digitales Fernsehen, Mobilfunk oder eben ein Datenträger, um die Datenbasis bereitzustellen. Darüber hinaus sollten verschiedene Geräteprofile spezifiziert werden, um die verschiedenen Geräteklassen und Fähigkeiten abzudecken, z.B. nur Audio mit einer Textzeile oder volle Grafik- und Videofähigkeit des Unterhaltungsgeräts.

Beispielhaft wird nachfolgend dargestellt, wie ein personalisiertes Radio mit dem erfindungsgemäßen Unterhaltungsgerät realisiert werden kann. Alle Titel der Radioprogramme eines DAB-Ensembles ca. 6 werden klassifiziert, beschrieben und/oder mit einem Triggersignal ausgestrahlt. Das Unterhaltungsgerät speichert alle Titel aus allen Radioprogrammen, die dem Benutzerprofil entsprechen, beispielsweise Rock aus den 70er und 80er Jahren. Zusätzlich werden die Wetter- und Börsennachrichten, die als eigenständige Audioobjekte mittels MOT gesendet werden, gespeichert. Zusammen mit Musikstücken von einer lokalen CD wird daraufhin ein personalisiertes Radioprogramm mit aktuellen Wetter- und Börsenkursen generiert. Durch eine Hit- oder Niete-Taste-Funktion werden einige Titel besonders häufig gespielt oder für immer gelöscht.

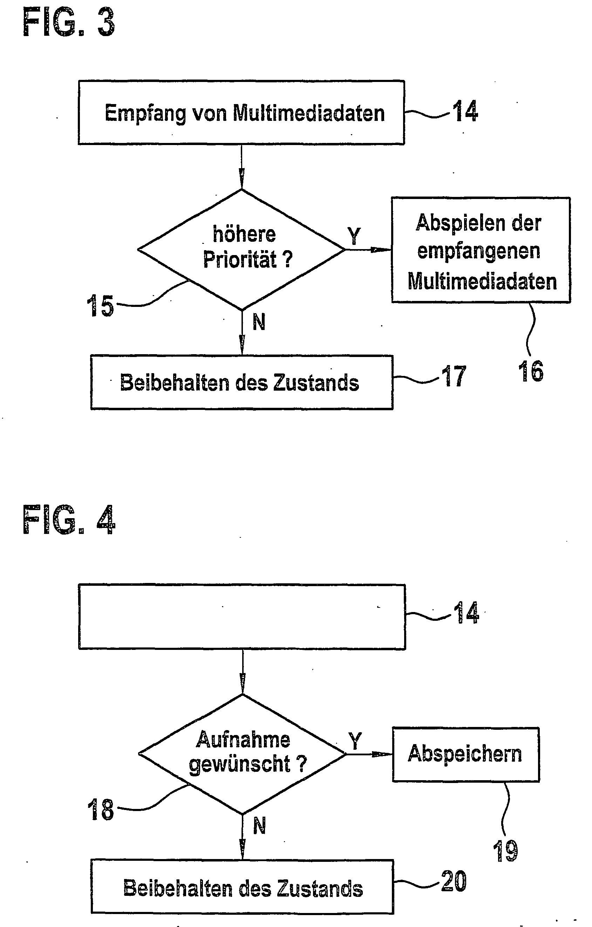

In Figur 3 wird ein zweites Flußdiagramm des erfindungsgemäßen Verfahrens dargestellt. In Verfahrensschritt 14 werden Audiodaten empfangen. In Verfahrensschritt 15 wird überprüft, ob die empfangenen Audiodaten eine höhere Priorität haben als die aktuell Wiedergegebenen Audiodaten, beispielsweise von einer CD. Ist das der Fall, dann werden die empfangenen Audiodaten in Verfahrensschritt 16 abgespielt, ist das nicht der Fall, dann werden in Verfahrensschritt 17 der Zustand des Unterhaltungsgeräts beibehalten.

In Figur 4 wird ein drittes Flußdiagramm des erfindungsgemäßen Verfahrens dargestellt. In Verfahrensschritt 14 werden wiederum Audiodaten empfangen. In Verfahrensschritt 18 wird überprüft, ob nun eine Aufnahme zu diesem Zeitpunkt gewünscht wird. Ist das der Fall, erfolgt in Verfahrensschritt 19 das Abspeichern der empfangenen Audiodaten, ist das nicht der Fall, dann erfolgt in Verfahrensschritt 20 das Beibehalten des Zustands des Unterhaltungsgeräts. Um zeitgenau eine Aufnahme durchzuführen, ist ein Triggersignal notwendig, das mit den Rundfunksignalen übertragen wird. Dieses Triggersignal wird für den Anfang und das Ende der Audiodaten übertragen.

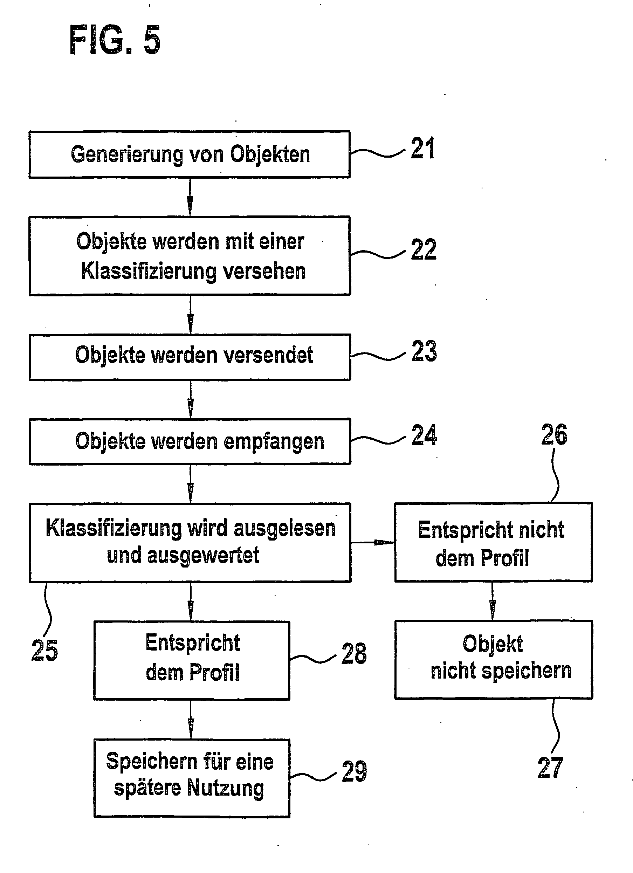

In Fig. 5 ist ein viertes Flußdiagramm des erfindungsgemäßen Verfahrens dargestellt. Hier ist der Gegenstand, Audiodaten entsprechend dem Benutzerprofil abzuspeichern. In Verfahrensschritt 21 werden sendeseitig die Audiodaten als Objekte erzeugt oder zu einem Stream zusammengefaßt. In Verfahrensschritt 22 werden die Objekte im Sender mit einer Klassifizierung, also einer Beschreibung des Inhalts, versehen beziehungsweise die vorhandene ergänzt. In Verfahrensschritt 23 werden die Objekte versendet. In Verfahrensschritt 24 werden die Objekte empfangen. Empfangsseitig werden dann die Objekte in Verfahrensschritt 25 bezüglich der Klassifizierung ausgelesen und ausgewertet. Wurde in Verfahrensschritt 26 festgestellt, dass die Klassifizierung nicht im Benutzerprofil angegeben ist, dann wird vom Prozessor 1 in Verfahrensschritt 27 entschieden, dass die Objekte nicht gespeichert werden. Wurde jedoch in Verfahrensschritt 28 festgestellt, dass die Klassifizierung im Benutzerprofil enthalten ist, dann wird in Verfahrensschritt 29 eine Abspeicherung der Objekte im Speicher 4 vorgenommen.

## Patentansprüche

1. Verfahren zum Abspielen von Audio-, insbesondere Sprach- und/oder Musiksignalen mit einem Unterhaltungsgerät,
wobei die Audiosignale zur Wiedergabe aus einem Speicher (4) des Unterhaltungsgeräts entnommen oder aus empfangenen digitalen Funksignalen gewonnen werden,
wobei die gespeicherten Audiosignale im Speicher (4) mit einer Klassifizierung versehen sind, während den aus den empfangenen Funksignalen gewonnenen Audiosignalen (14) im Funksignal eine Klassifizierung zugeordnet ist,
**dadurch gekennzeichnet, dass** eine Auswahl der Audiosignale anhand der Klassifizierung aufgrund eines im Unterhaltungsgerät gespeicherten, vom Benutzer vorgegebenen Benutzerprofils (11) erfolgt, in dem für eine jeweilige Klassifizierung eine Priorität vergeben ist, und wobei das Abspielen der Audiosignale (16) anhand der jeweiligen Priorität und einer Verfügbarkeit der Audiosignale (15) im empfangenen digitalen Funksignal und im Speicher (4) des Unterhaltungsgeräts durchgeführt wird.

2. Verfahren nach Anspruch 1, **dadurch gekennzeichnet, dass** die Audiosignale anhand des Benutzerprofils (28) abgespeichert werden.

3. Verfahren nach Anspruch 1 oder 2, **dadurch gekennzeichnet dass** ein Wiedergabe- oder Aufzeichnungsmodus des Unterhaltungsgeräts nach einer im empfangenen Funksignal enthaltenen elektronischen Programmzeitschrift automatisch ein- und ausgeschaltet wird und dann anhand des Benutzerprofils Audiosignale abgespeichert (29) oder abgespielt (16) werden.

4. Verfahren nach Anspruch 1, **dadurch gekennzeichnet, dass** in den empfangenen Funksignalen ein Triggersignal enthalten ist, mit dem das Unterhaltungsgerät ein- und ausgeschaltet wird.

5. Verfahren nach einem der vorhergehenden Ansprüche, **dadurch gekennzeichnet, dass** bei einem stummgeschalteten Unterhaltungsgerät aus den Funksignalen gewonnene Audiosignale anhand des Benutzerprofils in Abhängigkeit von der Klassifizierung dennoch hörbar abgespielt werden.

6. Verfahren nach einem der vorhergehenden Ansprüche, **dadurch gekennzeichnet, dass** anhand der Klassifizierung Audiosignale verknüpft werden.

7. Verfahren nach einem der vorhergehenden Ansprüche, **dadurch gekennzeichnet, dass** die Klassifizierung am Unterhaltungsgerät hierarchisch in einer Verzeichnisstruktur abgespeichert wird.

8. Unterhaltungsgerät zur Durchführung des Verfahrens nach einem der Ansprüche 1 bis 7, **dadurch gekennzeichnet, dass** das Unterhaltungsgerät einen Prozessor (1) zur Auswertung und Decodierung der Audiosignale anhand des Benutzerprofils, einen Speicher (4) zum Abspeichern der Audiosignale und des Benutzerprofils, einen Lautsprecher (6), eine Anzeige (8), eine Empfangsvorrichtung (2, 3) zum Empfang der Audiosignale und eine Eingabevorrichtung (10) zur Eingabe eines Benutzerprofils (11) und zur Eingabe von Prioritäten für Signalklassen durch den Benutzer und zur Speicherung der Prioritäten innerhalb des Benutzerprofils, aufweist.

## Claims

1. Method for playing back audio signals, particularly voice and/or music signals, with an entertainment appliance,
where the audio signals are taken, for the purpose of reproduction, from a memory (4) in the entertainment appliance or are obtained from received digital radio signals,
the stored audio signals in the memory (4) being provided with a classification, while the audio signals (14) obtained from the received radio signals have an associated classification in the radio signal,
**characterized in that** the audio signals are selected using the classification on the basis of a user profile (11) which is stored in the entertainment appliance, which is prescribed by the user and in which a priority is allocated for a respective classification, and where the audio signals (16) are played back using the respective priority and an availability of the audio signals (15) in the received digital radio signal and in the memory (4) of the entertainment appliance.

2. Method according to Claim 1, **characterized in that** the audio signals are stored using the user profile (28).

3. Method according to Claim 1 or 2, **characterized in that** a reproduction or recording mode of the entertainment appliance is automatically switched on and off according to an electronic programme guide which the received radio signal contains and then audio signals are stored (29) or played back (16) using the user profile.

4. Method according to Claim 1, **characterized in that** the received radio signals contain a trigger signal which is used to switch the entertainment appliance on and off.

5. Method according to one of the preceding claims, **characterized in that** when the entertainment appliance is muted, audio signals obtained from the radio signals are nevertheless audibly played back using the user profile on the basis of the classification.

6. Method according to one of the preceding claims, **characterized in that** the classification is used to logically combine audio signals.

7. Method according to one of the preceding claims, **characterized in that** the classification is stored on the entertainment appliance hierarchically in a directory structure.

8. Entertainment appliance for carrying out the method according to one of Claims 1 to 7, **characterized in that** the entertainment appliance has a processor (1) for evaluating and decoding the audio signals using the user profile, a memory (4) for storing the audio signals and the user profile, a loudspeaker (6), a display (8), a reception apparatus (2, 3) for receiving the audio signals and an input apparatus (10) for input of a user profile (11) and for input of priorities for signal classes by the user and for storing the priorities within the user profile.

## Revendications

1. Procédé de lecture de signaux audio, notamment de signaux vocaux et/ou musicaux avec un appareil de divertissement selon lequel
on prend les signaux audio à lire dans une mémoire (4) de l'appareil de divertissement ou à partir de signaux radio numériques reçus,
les signaux audio mémorisés dans la mémoire (4) ayant une classification alors qu'aux signaux audio (14) obtenus à partir des signaux radios reçus, on associe une classification,
**caractérisé en ce qu'**
on effectue une sélection des signaux audio à l'aide de la classification en s'appuyant sur un profil d'utilisateur (11) prédéfini par l'utilisateur, enregistré dans l'appareil de divertissement, profil dans lequel il y a une priorité pour une classification respective et
la lecture des signaux audio (16) se fait à partir de la priorité respective et d'une disponibilité des signaux audio (15) dans le signal radio numérique reçu et dans la mémoire (4) de l'appareil de divertissement.

2. Procédé selon la revendication 1,
**caractérisé en ce que**
les signaux audio sont mémorisés à l'aide du profil d'utilisateur (28).

3. Procédé selon les revendications 1 ou 2,
**caractérisé en ce qu'**
on active ou on neutralise un mode de reproduction ou d'enregistrement de l'appareil de divertissement selon un journal de programme électronique contenu dans le signal radio reçu, de façon automatique, et on mémorise (29) ou on lit (16) les signaux audio à l'aide du profil d'utilisateur.

4. Procédé selon la revendication 1,
**caractérisé en ce que**
les signaux radios reçus contiennent un signal de déclenchement par lequel on branche ou on coupe l'appareil de divertissement.

5. Procédé selon l'une des revendications précédentes,
**caractérisé en ce que**
lorsque l'appareil de divertissement est commuté en mode muet, à partir des signaux audio déduits des signaux radios, on lit d'une manière néanmoins audible les signaux à l'aide du profil d'utilisateur en fonction de la classification.

6. Procédé selon l'une des revendications précédentes,
**caractérisé en ce qu'**
on combine les signaux audio à l'aide de la classification.

7. Procédé selon l'une des revendications précédentes,
**caractérisé en ce qu'**
on mémorise de manière hiérarchique la classification dans l'appareil de divertissement selon une structure de catalogue.

8. Appareil de divertissement pour la mise en oeuvre du procédé selon l'une des revendications 1 à 7,
**caractérisé en ce qu'**
il comporte un processeur (1) pour exploiter et décoder les signaux audio à l'aide du profil d'utilisateur, une mémoire (4) pour enregistrer les signaux audio et le profil d'utilisateur, un haut-parleur (6), un afficheur (8), un dispositif de réception (2, 3) pour recevoir les signaux audio et un dispositif d'entrée (10) pour introduire un profil d'utilisateur (11) et aussi les priorités pour les classes de signaux par l'utilisateur et pour mémoriser les priorités du profil d'utilisateur.
